# EUROPEAN PATENT APPLICATION

(11) **EP 4 598 149 A1**
(43) Date of publication of application: **06.08.2025**
(21) Application number: 25154406.0
(22) Date of filing: 28.01.2025
(51) Int. Cl.: H04W 52/02, H04W 84/12

(54) **SYSTEMS FOR AND METHODS OF POWER ADAPTIVE MULTILINK OPERATION**

(30) Priority: 30.01.2024 US 202418427073
(71) Applicant: Avago Technologies International Sales Pte. Limited, Singapore 768923 (SG)
(72) Inventor: Raman, Rakesh, Irvine, CA, 92618 (US); Vaidya, Harish, Irvine, CA, 92618 (US); Tadahal, Shivkumar Basavaraj, Irvine, CA, 92618 (US); Gupta, Raghvendra, Irvine, CA, 92618 (US); Raveendranath Kamath, Manoj, Irvine, CA, 92618 (US); Garg, Neeraj Kumar, Irvine, CA, 92618 (US); Thimmaiah Shetty, Raghavendra Prasad Gumgere, Irvine, CA, 92618 (US); Jance, Jithu, Irvine, CA, 92618 (US)
(74) Representative: Grünecker Patent- und Rechtsanwälte PartG mbB

(57) **Abstract**

Systems and methods use a protocol for multilink operations. The systems and methods can use a circuit configured to provide frames across a connection comprised of one or more links. The circuit 1. is configured to use during an idle condition a lower power consuming link of the links for link management operations, 2. is configured to use during the lower power consuming link of the links for beacon synchronization operations, or 3. is configured to select the links in response to traffic parameters and a power consumption characteristic of the links.

## Description

### Field of the Disclosure

This disclosure generally relates to systems for and methods of communication between an access point (AP) and a client device (e.g., a station (STA)) or between other communication devices. In some embodiments, this disclosure generally relates to systems and methods related to multilink operations including but not limited to a systems and methods that use a multilink operational protocol for saving power or more efficiently using power.

### Background of the Disclosure

In the last few decades, the market for wireless communications devices has grown by orders of magnitude, fuelled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11 standards Bluetooth, global system for mobile communications (GSM), code division multiple access (CDMA), etc. As higher data throughput and other changes develop, newer standards are constantly being developed for adoption, such as a progression from IEEE 802.11n to IEEE 802.11ac and 802.11be. Devices can utilize multiple links to transmit and receive data. Using multiple links and switching between links consumes power.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points (APs) in communication with one or more devices or stations (STAs), according to some embodiments.
FIGS. 1B and 1C are block diagrams depicting computing devices useful in connection with the methods and systems described herein, according to some embodiments.
FIG. 2A is a block diagram depicting a network including APs and STAs according to some embodiments.
FIG. 2B is a more detailed block diagram of an AP or STA in the network illustrated in FIG. 2A configured for a multilink operation according to some embodiments.
FIG. 3 is a graph indicating a relationship between power and splits for different traffic scenarios for operations involving the AP or STA illustrated in FIG. 2B according to some embodiments.
FIG. 4 is a flow diagram depicting a low battery operation involving the AP or STA illustrated in FIG. 2B according to some embodiments.
The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE 802.11be^{™}, IEEE P802.11n^{™}; IEEE P802.11ax^{™}; and IEEE P802.11ac^{™} standards. The IEEE 802.11be specification (e.g., for WiFi7 devices) provides for the use multiple links to transmit/receive data (e.g., multi-link operation (MLO)) to reduce latency and improve throughput. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes some embodiments of protocols, algorithms, and operations for MLO.

Some embodiments disclosed herein are related to protocols, operations, and algorithms that allow more efficient use of MLO. In some embodiments, algorithms and parameters are used to select links and switch links to save power and increase battery life. The systems and methods can be used with battery restricted devices (e.g., mobile phones, mobile access points (APs)) to conserve power consumption during MLO and when activity is low. In some embodiments, a protocol is provided for a WiFi network (e.g., IEEE 802.1 1be network, etc.), a cellular network, point to point communications, or combinations thereof. The power adaptive MLO protocol can be a used with any type of communication device. In some embodiments, the systems and methods allow devices to use MLO without significant wasted power consumption related to MLO or multiple radio operation.

In some embodiments, the systems and methods adjust MLO in response to user facing parameters (e.g., ease of discovery, ease of establishing connection, or traffic (e.g., latency or throughput), or battery duration). In some embodiments, the systems and methods adjust MLO in response to environmental parameters (e.g., connection quality, connection range, congestion, AP load, or interference from other radios like blue tooth (BT) radios). In some embodiments, the systems and methods operate according to the 802.11be specification and allow each link to be in power saving mode independently which can be leveraged to control transmit-receive (Tx/Rx) activity. In some embodiments, the systems and methods select the most efficient link based on the exemplary parameters discussed above.

A connection may refer to communication instituted between nodes (such as a wireless communication between nodes) for exchanging data according to a protocol in some embodiments. In some embodiments, a connection is established using the three-way or four-way handshake mechanism (via discovery, authentication, and association operations) in some embodiments. The connection can be a wireless connection to or from a client device (e.g., a STA) and AP or can be between other types of communication devices. The wireless network can be an 802.11 WiFi network (e.g., IEEE 802.11be) in some embodiments.

A connection may have one or more links. A link may refer to a wireless channel for communicating data in some embodiments. One logical connection may include two or more wireless links in some embodiments. The client device or AP can be implemented in a device including one or more integrated circuits (ICs) packaged in an IC package.

An authentication operation may refer to a procedure for how a client device gains access to the network. Authentication provides proof of identity to ensure the client device or user is allowed access to the network. An association operation may refer to a procedure for a client device or user that has been authenticated to become associated with an AP. Association allows the network to determine where to send data that is intended for a client device (e.g., data is sent through the AP with which the client device is associated). Generally, a client device is only associated with a single AP. A disassociation may refer to procedure where a client device is no longer associated with an AP in some embodiments. A discovery operation may refer to the communication of frames for discovering the availability and/or identification (ID) of an AP or other wireless device in some embodiments. Discovery operations may involve the communication of probe request frames and probe response frames.

Some embodiments relate to a first device. The first device includes a circuit configured to provide frames across a connection including one or more links to a second device. The circuit 1. is configured to use during an idle condition a lower power consuming link of the links for link management operations, 2. is configured to use during the idle condition the lower power consuming link of the links for beacon synchronization operations, or 3. is configured to select the links in response to traffic parameters and a power consumption characteristic of the links.

An idle condition may refer to to the state of a wireless device or connection when the device or connection is not actively transmitting or receiving data in some embodiments. In some embodiments, an idle state is when a device is powered on and connected to the wireless network, but is not actively transmitting or receiving data. In this state, the device can be waiting for data to send or waiting for incoming data. A sleep state or sleep mode can refer to a mode where a device conserves power in some embodiments. In some embodiments, a device may enter a sleep state to conserve power when not actively participating in communication. In the sleep state, the device essentially turns off certain components (e.g., the radio) to reduce power consumption. When the device needs to communicate, the device wakes up from the sleep state. For example, a link can be placed in a sleep mode to reduce power being used by components associated with the link. For example, a radio for a link can be turned off in a sleep mode for the link while a radio for other links remains on. A lower power consuming link may refer to a link in an MLO that is using less power than another link in the MLO. In some embodiments, the lower power consuming link consumes a least amount of power or a low level of power in some embodiments.

In some embodiments, the frames are provided according to an 802.11 protocol and the connection is established by using an association or authentication operation. In some embodiments, the circuit is configured to put one or more selected links of the links in a sleep mode when required performance is reduced.

In some embodiments, the circuit is 1. configured to use during the idle condition the lower power consuming link of the links for link management operations in response to a low battery condition, 2. is configured to use during the idle condition the lower power consuming link of the links for beacon synchronization operations in response to the low battery condition, or 3. is configured to select the links in response to the traffic parameters and the power consumption characteristic of the links in response to the low battery condition. In some embodiments, the circuit is configured to use during the idle condition a lower power consuming link of the links for link management operations, is configured to use during the idle condition the lower power consuming link of the links for beacon synchronization operations, and is configured to select the links in response to the traffic parameters and the power consumption characteristic of the links.

In some embodiments, the first device the second device are each one of mobile station devices or mobile access points. In some embodiments, the traffic parameters include a number of packets per second (pps) or the rate at which data is arriving from the applications for transmission over the wireless medium (e.g., between STA and AP). In some embodiments, at least one of the links uses the 2.4 GHz frequency band, and another of the links uses the 5 GHZ frequency band. In some embodiments, the links can be provided on one or more bands that supporting MLO (e.g., for a given regulatory domain/region in the 2.4GHz, 5GHz, and 6GHz frequency bands for the Unites States and Europe).

Some embodiments relate to a first device. Then first device includes a circuit configured to provide MLOs across a connection to a second device. The circuit is configured to select one or more links associated with the MLOs. The one or more links are selected in response to a user facing parameter or an environmental parameter. The links are selected to reduce power consumption associated with the MLOs.

In some embodiments, the circuit is configured to use during idle condition a lower power consuming link of the links for link management operations. In some embodiments, the circuit is configured to use during the idle condition a lower power consuming link of the links for beacon synchronization operations. In some embodiments, the circuit is configured to select the links in response to traffic parameters and a power consumption characteristic of the links. In some embodiments, the one or more links are selected in response to the user facing parameter. The user facing parameter includes a traffic parameter. In some embodiments, the one or more links are selected in response to the environmental parameter. The environmental parameter includes a connection quality parameter.

Some embodiments relate to a first device. The first device includes a circuit configured to provide MLOs across a connection to a second device. The circuit is configured to select one or more links associated with the MLOs. The one or more links are selected to reduce power consumption associated with the MLOs in response to a low battery condition.

In some embodiments, the low battery condition is associated with a battery of the first device being below a first threshold and the first device being solely on battery power. In some embodiments, during the low battery condition, the circuit is configured to use during an idle condition a lower power consuming link of the links for link management operations, is configured to use during the idle condition the lower power consuming link of the links for beacon synchronization operations, or is configured to select the links in response to traffic parameters and a power consumption characteristic of the links.

In some embodiments, during the low battery condition, the circuit is configured to use during an idle condition a lower power consuming link of the links for link management operations, is configured to use during the idle condition the lower power consuming link of the links for beacon synchronization operations, and is configured to select the links in response to traffic parameters and a power consumption characteristic of the links.

In some embodiments, the one or more links are selected in response to a user facing parameter or an environmental parameter. In some embodiments, the traffic parameter are used to determine a throughput requirement and a latency requirement for selection of the links. A message may refer to data that is provided between a first device and a second device to convey a parameter, a command, a signal, or other data and may include or be in the form of a frame or frames in some embodiments.

A frame may refer to a digital data transmission unit in some embodiments. In some embodiments, the frame is provided according to an 802.11 protocol. For example, a frame may refer to a container for a single network packet. A data frame may refer to a frame that contains data in some embodiments. In some embodiments, a management frame may refer to a frame for control or management operations including but not limited to beacon frames, probe request/response frames, authentication request/response frames, association request/response frames, deauthentication frames, disassociation requests (e.g., frames), etc. A beacon message or frame may refer to a management frame that is periodically transmitted by an access point within a wireless network in some embodiments. The beacon frame can contain broadcast information about the network, enabling nearby devices, such as laptops or smartphones, to discover and connect to the network seamlessly. The beacon message can include the network's name (SSID), supported data rates, security settings, and other configuration parameters in some embodiments. Beacon synchronization operations may refer to timing operations involving one or more beacon frames. Beacon synchronization operations may involve clock synchronization, beacon time stamps and beacon intervals in some embodiments.

Traffic parameters may refer to data related to traffic associated with a connection in some embodiments. Traffic information can include latency, throughput, discovery, and/or connection establishment data in some embodiments. Power consumption characteristics may refer to energy or power required for a link associated with a connection in some embodiments. Power consumption characteristics can include power per spatial stream (NSS), power per throughput, etc. for a link in some embodiments. A low battery condition may refer to a condition where a battery power level, voltage or energy level is below a threshold in some embodiments. A low battery condition may not include a condition where a battery has a power level below a threshold and is powered by a different source (grid or other battery).

### A. Computing and Network Environment

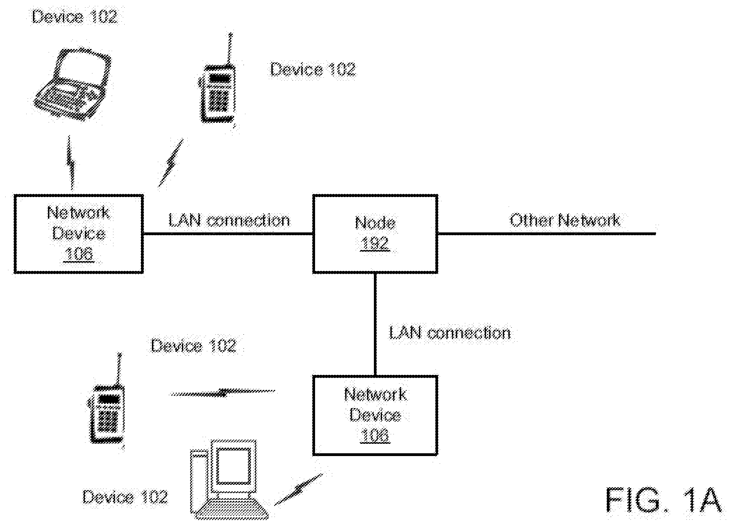

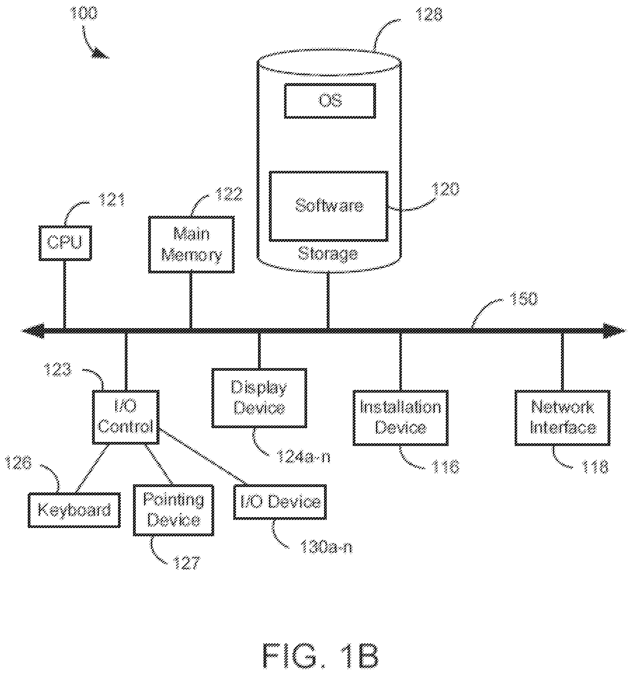

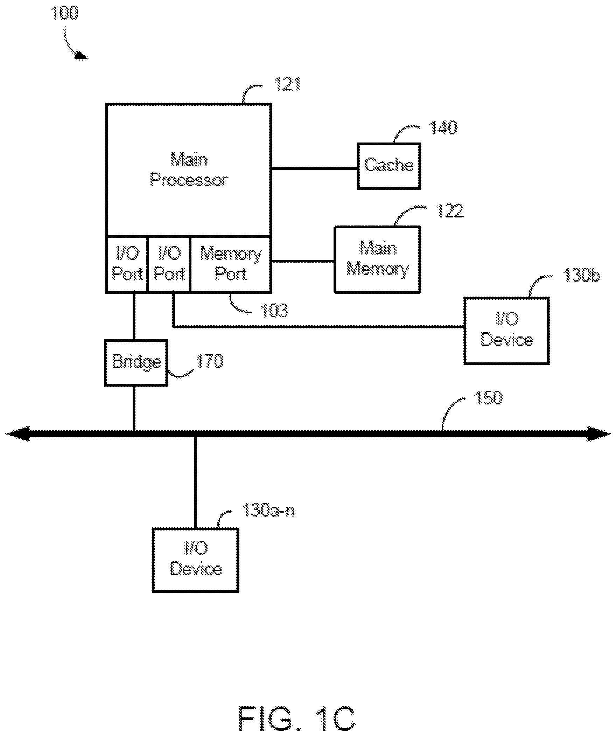

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more client devices (e.g., STAs or mobile STAs) or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; ARM PLC, or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus (e.g., system bus 150). Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11x, IEEE 802.11be, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100 'via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of operating system, by Unix, Android by Google, Apple IOS, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. MLO Operations and Methods and Devices Using Such Operations

Disclosed herein are systems and methods that can be used in any communication system including but not limited to Wi-Fi and LTE networks. The systems and methods can be used with an AP or STA in a communication network such as the devices discussed with reference to FIGS. 1A-C. Although embodiments of MLO operations for communications under the IEEE 802.11 be standard are described herein, the systems and methods can be used with other networks (e.g., cellular and satellite networks) and in point to point communications.

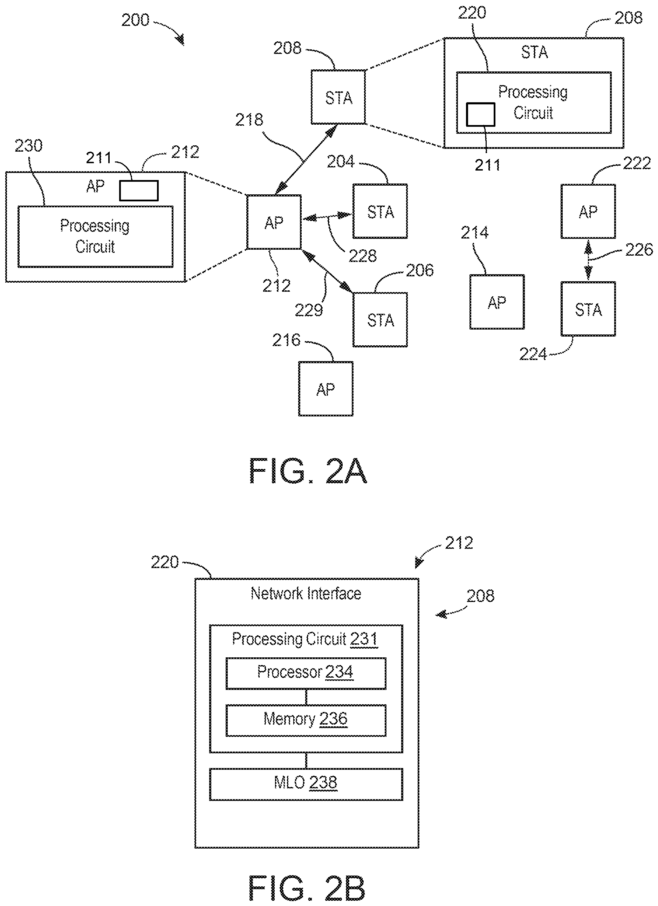

With reference to FIG. 2A, a wireless communication network or system 200 includes client devices or STAs 204, 206, 208, and 224 and APs 212, 214, 216, and 222. STAs 204, 206, 208, and 224 and APs 212, 214, 216, and 222 can be used in the systems discussed with reference to FIGS. 1A-C. Any number of STAs 204, 206, 208, and 224 and APs 212, 214, 216, and 222 can be used in the network or system 200. STAs 204, 206, 208, and 224 and APs 212, 214, 216, and 222 are mobile battery powered devices including a battery 211 in some embodiments. A STA or client device may refer to any device for communicating in communication system and includes but is not limited to a fixed, portable, or mobile laptop, desktop personal computer, personal digital assistant, workstation, wearable device, smart phone, or Wi-Fi phone in some embodiments. An access point or AP may refer to a device for communicatively coupling one or more non-AP devices (e.g., a client device or STA) to a network in some embodiments. An AP may enable non-AP devices to connect and communicate with a network in some embodiments. In some embodiments, an AP is a wireless access point (WAP) configured to enable wireless communication between non-AP devices. An AP includes but is not limited to a mobile, portable, or fixed hot spot, router, bridge, gNB node, eNodeB, evolved node B, or other communication device. An AP can provide services to a STA, such as, serving as a connection point to another network.

STAs 204, 206, 208, and 224 and APs 212, 214, 216, and 222 can each include a wireless transceiver and various modules for communicating via connections. The modules can be software (e.g., firmware), hardware components, and combinations thereof. In some embodiments, each of STAs 204, 206, 208, and 224 and APs 212,214, 216, and 222 includes an IEEE 802.11 conformant media access control (MAC) layer circuit and physical (PHY) layer interface to the wireless medium and can be part of a larger device or system. In some embodiments, each of STAs 204, 206, 208, and 224 and APs 212, 214, 216, and 222 operates according to other standards than the IEEE 802.11 standard.

A connection for wireless communication can be established between at least one of STAs 204, 206, 208, and 224 and APs 212, 214, 216, and 222 after authentication and association operations. For example, STA 208 has a connection 218 to AP 212. STAs 204, 206, 208, and 224 each include circuitry (e.g., a processor or processing circuit 220), and APs 212, 214, 216, and 226 each include circuitry (e.g., a processing circuit 230) for establishing and cancelling the connection 218 and communicating data across the connection. In another example, STA 204 has a connection 228 to AP 212, and STA 206 has a connection 229 to AP 222. STAs 204, 206, 208, and 224 each include circuitry (e.g., a processor or processing circuit 220 and MLO module), and APs 212, 214, 216, and 222 each include circuitry (e.g., a processing circuit 230 and MLO module) for operating according to MLO operations. The connections 218, 228, 229 and 226 are wireless connections formed using an association and/or authorization operation and cancelled using a disassociation and/or deauthentication operation in some embodiments. The connections 218, 228, 229 and 226 can be single link or multilink connections associated with APs 212 and 222 and can be a secure connection (e.g., using encryption) in some embodiments. In some embodiments, the connections 218, 228, 229 and 226 provide data communications and control and management communications on one or more channels in a 5G, 6G, 60G, or 2G band.

Referring to FIG. 2B, a device 220 is an AP 212 or STA 208 (FIG. 2A) and is configured for an MLO protocol according to some embodiments. In some embodiments, device 220 includes a processing circuit 231, and an MLO module 238. The term MLO module may refer to a module that controls, processes, and/or provides MLO in some embodiments. The processing circuit 231 is any circuitry or components that can perform logic and communication processing operations and can include a processor and a memory 236 in some embodiments. MLO may refer to communication across a connection using more than one link in some embodiments. MLO module 238 is part of processing circuit 231 in some embodiments. An operation can be considered an MLO even though a single link is used at certain times for the connection (e.g., according to power savings features described herein) in some embodiments.

In some embodiments, the processing circuit 231 is implemented as a field-programmable gate array, an application-specific integrated circuit, hardware, a software executing processor, or state machines. In some embodiments, the processing circuit 231 is part of layers (e.g., MAC, network, PHY layers) of IEEE 802.11 standard devices. The processing circuit 231 can be configured to perform communication operations, MLO, frame building and processing, probe request and response operations, discovery operations, association operations, authorization operations, connection setup, disassociation operations, handoff operations, and deauthentication operations in some embodiments. Instructions for the processing circuit 231 are stored in a non-transitory medium such as memory 236 in some embodiments. Processing circuit 220 of STA 208 and processing circuit 230 of AP 212 are similar to processing circuit 231 in some embodiments.

The memory 236 may be one or more devices (e.g., RAM, ROM, Flash memory, hard disk storage) for storing data and/or computer code for completing and/or facilitating the various processes described herein. The memory 236 may be or include non-transient volatile memory, non-volatile memory, and non-transitory computer storage media. Memory 236 may include database components, object code components, script components, or any other type of information structure for supporting the various activities and information structures described herein. Memory 236 may be communicably coupled to the processor and include computer code or instructions for executing one or more processes described herein. The processor may be implemented as one or more application specific integrated circuits (ASICs), field programmable gate arrays (FPGAs), a group of processing components, a software executing processor, state machines or other suitable electronic processing components. As such, AP, STA, or network device 106 (FIG. 1A) is configured to execute a variety of modules and/or programs and store associated data in a database of the memory 236. The modules (e.g., MLO module 238) can be implemented in AP software (e.g., MAC layer or PHY layer software) or STA software (e.g., MAC layer or PHY layer software). In some embodiments, the AP 212 or STA 208 (FIG. 2A) is structured and used to establish connections and hand off access to other computing systems and devices (e.g., wireless communication device(s) 102, network hardware 192, other access points or network devices 106, (FIGS. 1A-C) via a network (e.g., WAN connection, LAN connection, WLAN connection, etc.).

In some embodiments, the MLO module 238 is configured to provide MLO operations adapted for power saving operation or to preserve battery 211 (FIG. 2A). For example, the MLO module 238 is configured to select the most efficient link MLO for particular operations. Links can be chosen in response to user facing parameters (e.g., ease of discovery, ease of establishing connection, or traffic (e.g., latency or throughput), or battery duration) and/or environmental parameters (e.g., connection quality, connection range, congestion, AP load, or interference from other radios like blue tooth (BT) radios). In some embodiments, the MLO module 238 is configured to operate according to the 802.11be specification and allow each link to be in power saving mode independently which can be leveraged to control transmit-receive (Tx/Rx) activity.

In some embodiments, MLO module 238 is configured to choose the most efficient link based on a user facing parameter or an environmental parameter. A user facing parameter may refer to data associated with a connection to a user device (STA) and may relate to traffic, battery and connection data associated with the user device or AP device in some embodiments. An environmental parameter may refer to data associated with an environment of a connection and may relate to quality, range, congestion, interference, and AP load associated with the user device or AP in some embodiments. Environmental parameters and user facing parameters can be derived from channel quality parameters and use parameters associated with 802.11 standards (e.g., clear channel assessment, number of spatial streams, transmit power, modulation and coding schemes, channel width, guard interval, etc.) in some embodiments. A throughput requirement may refer to a needed data transfer rate for a particular application, operation, or connection in some embodiments. A latency requirement may refer to a needed time it takes for data to travel across a connection. Different applications and services can have varying sensitivity to latency and throughput. A traffic quality parameter may refer to data indicating a performance and/or efficiency of data transmission over a connection. The data can relate to or be derived from signal strength, signal to noise ratio, interference, channel congestion, data rate, modulation, and/or quality of service in some embodiments.

In some embodiments, the MLO module 238 controls communication operations according to certain scenarios. For example, at an initial connection, the device 220 operation chooses the most efficient link based on environmental parameters (e.g., quality, congestion, AP load, interference). The environmental parameters can be provided or derived according to 802.11 standards. For example, the environmental parameters may include signal to noise ratio, number of dropped packets, noise level, received signal strength, fragmentation threshold, channel utilization, etc. above parameters is given below. The chosen link can be in any frequency band (e.g., 2.4 GHz, 5 GHz, and 6 GHz). In some embodiments, any of three radios in device 220 can be utilized for the link or be part of the connection.

Once the connection is established, the most power consuming link(s) is moved to a sleep state so that the link management (e.g., beacon reception) happens in the least power consuming link for idle conditions) in some embodiments. The least power consuming link is used for link management operations in some embodiments. Link management operations may refer to operations for establishing, maintaining, and optimizing the communication link between wireless devices. The link management operations attempt ensure to reliable and efficient wireless communication across a connection in some embodiments. Link management operations include but are not limited to association, reassociation, authentication, deauthentication, disassociation, roaming, power management, quality of service (QoS), dynamic rate selection, frame aggregation, fast BSS transition, etc. Other links may be chosen as situations change. For example, when there are loss of beacons due to the device 220 movement (e.g., roaming from AP 212 to AP 222), another link can be chosen. The other link can be chosen based on the environmental parameters in the new situation.

During idle conditions, device 220 is configured to listen for a single beacon to optimize on listen current usage. Listening for a single beacon ensures that only one link is woken up for synchronization with the AP periodic information. Wakeup for other links are scheduled for critical updates pertaining to other links in some embodiments. In some embodiments, in the idle scenario, MLO module 238 uses only the least power consuming link and only one link is available for periodic wake-up of the device for beacon synchronization purposes. Device 220 can send and receive management frames to select the appropriate link for beacon synchronization, for idle modes, or initial connections.

In some embodiments, the MLO module 238 controls communication operations according to different types of traffic scenarios. Operation under different traffic conditions is adapted for the power or throughput required by MLO. For example, operation can be adapted for traffic that does not require multilinks. In some embodiments, device 220 can respond to traffic parameters (e.g., transmit parameters and/or receive parameters) to select links. Traffic parameters include but are not limited to traffic rates from which throughput requirements can be derived and traffic patterns from which latency requirements can be derived. In some embodiments, MLO module 238 is configured to select one or more links that have the best rate with lowest power footprint and puts the one or links into operation dynamically in response to the traffic parameters. Once a threshold of required performance is reduced, the one or more links which have a high power consumption footprint are put to sleep or idled, without affecting the connection in some embodiments. In some embodiments, when required performance is increased a new link or additional link is selected to meet the performance based at least in part on efficient power usage. Device 220 can send and receive management frames to select the appropriate link for the particular traffic scenarios. In some embodiments, device 220 includes a lookup table for the particular links and scenarios.

Example I below provides a scenario for control of communication operations during according to different types of traffic scenarios.

### Example I

| | | | |
|---|---|---|---|
| *Pt : Tx power* | *Pr: Rx power* | *Pl : Idle power* | *tl: idle time* |
| *Bl : Tx bits* | *Br : Rx bits* | *r: Rate: Tx or Rx* | |

Power taken when a continuous, non splitted transfer of data equals Tx power plus Rx power plus idle power before the link goes to sleep = Pt. Bt/r + Pr. Br/r+P1t1 Power taken when the same data gets split into n non-continuous chunks based on the arrival pattern = Pt.Bt/r + PrBr/r + Pltl + n

For comparing two bands of Wi-Fi, the following exemplary factors in Table I can be used.

**Table 1**

| Factor | 2.4GHz | 5GHz | unit |
|---|---|---|---|
| Bandwidth | 20 | 80 | MHz |
| nss | 2 | 2 | |
| Rate _{(mcs)} | 7 | 9 | |
| Rate _{(abs)} | 229 | 960 | Mbps |

Characteristics of traffic types for very high throughput or latency requirements are given below in Table 2.

**Table 2**

| Profiles | | Rx Packets/second | Tₓ Packets/second |
|---|---|---|---|
| | 1. Background Traffic | 500 | 100 |
| | 2. Active Traffic; but not High Throughpout | 200 | 400 |
| | 3. Active Traffic; High Rx Throughput | 500 | 1000 |
| | 4. Active Traffic; High Rx Throughput | 2000 | 4000 |

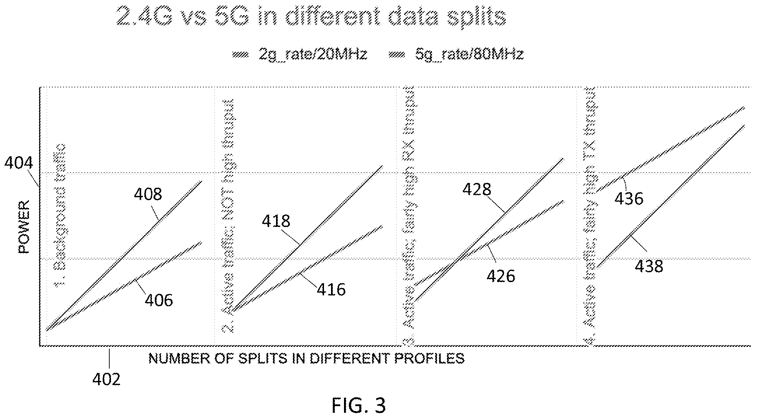

When the number of splits increases, the behavior of power on each of the profiles in 2.4GHz and 5GHz is shown in FIG 3. Splits may refer to a number of packets per second (pps) or the rate at which data is arriving from the applications for transmission over the wireless medium (e.g., between a STA and a AP) in some embodiments. FIG. 3 includes an x-axis 402 representing number of splits and a y-axis 404 representing power. Curve 406 represent the relationship between PacketsPerSecond (pps) or the rate at which data is arriving from the applications for transmission over the wireless medium (e.g., between STA and AP) and power in the 2 GHz band for a background traffic scenario. Background traffic can be considered less than 700 (e.g., less than or equal to 500) packets per second on the receive side and less than 100- 400 (e.g., less than or equal to 100) packets per second on the transmit side in some embodiments. Curve 408 represent the relationship between splits and power in the 2 GHz band for the background traffic scenario. Curve 416 represent the relationship between splits and power in the 2 GHz band for an active traffic without high traffic scenario. Not high traffic can be considered less than 700-2500 (e.g., less than or equal to 2000) packets per second on the transmit side and less than 400-500 (e.g., less than or equal to 400) packets per second on the receive side in some embodiments. Curve 418 represent the relationship between splits and power in the 2 GHz band for the active traffic without high traffic scenario. Curve 426 represent the relationship between splits and power in the 2 GHz band for an active traffic with high receive (e.g., fairly high) throughput. High receive throughput can be considered more than 2500-5000 (e.g., greater than or equal to 4000 ) packets per second in some embodiments. Curve 428 represent the relationship between splits and power in the 2 GHz band for the active traffic with high receive throughput. Curve 426 represent the relationship between splits and power in the 2 GHz band for an active traffic with high transmit (e.g., fairly high) throughput. High transmit throughput can be considered more than 500-3500 (e.g., greater than or equal to 4000) packets per second in some embodiments. Curve 428 represent the relationship between splits and power in the 2 GHz band for the active traffic with high transmit throughput.

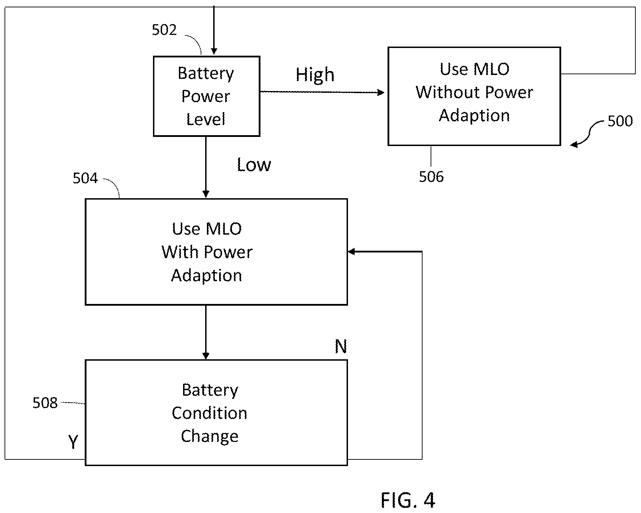

Curves 406, 408, 416, 418, 426, 428, 436, and 430 show that for low to moderate traffic which has sporadic traffic but does not need higher performance, a 2.4 GHz link provides better power saving. In contrast, the 5 GHz link provides better power efficiency for high transmit throughput and high receive throughput with a higher number of splits. In some embodiments, the MLO module 238 controls communication operations for power efficiency using the information shown in FIG 4 and in Table 2. For example, MLO module 238 can choose a link in a particular band in response to the transmit or receive requirements and number of splits.

In some embodiments, the MLO module 238 controls communication operations according to battery power levels or energy storage levels. Operation under low level of battery conditions occurs on the link with the lowest power profile. Once the battery status changes (higher power level or device receives another power source (e.g., grid), higher performance links can be chosen. In some embodiments, the power adaptations described above are only entered when a low battery condition is present. In some embodiments, the power adaptations described above are used regardless of battery condition. In some embodiments, a user can enable for disable the power adaptations.

With reference to FIG. 4, a flow 500 can be used by device 220 (FIG. 3). At an operation 502, a battery condition is determined. The battery condition can be determined based upon its output voltage or other indicator of storage available in the battery. Device 220 can include a sensor for sensing a low battery condition. A low battery condition can be determined when the sensed parameter is below a threshold. The threshold can be fixed or programmable. In some embodiments, the threshold is increased as the lifetime of the battery increases (e.g., older batteries have higher thresholds).

If the battery condition is low and device 220 is not plugged in, device 220 advances to operation 504. At operation 504, device 220 uses adaptive power MLO. The adaptive MLO can use power saving features associated with operating at initial condition, operating under idle conditions and/or operating according to traffic scenarios described above. At an operation 508, device 220 determines if the device 220 is plugged in or if the battery level has increased above a threshold, and if so, advances to operation 502. At operation 502, if the battery is above a threshold or device 220 is plugged in, device 220 advances to operation 506 and does not use power adaptive MLO in some embodiments.

In some embodiments after operation 508, device 220 remains using power adaptive MLO until an operational change occurs even though the battery condition has changed. For example, device 220 can continue to use power adaptive MLO until a traffic scenario changes, until a roaming event, a channel change is necessary, an idle state is entered, etc. in some embodiments.

It should be noted that certain passages of this disclosure can reference terms such as "first" and "second" in connection with subsets of frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code. Circuitry may refer to any electronic circuits or circuits.

Circuitry or circuit may refer to any electronic circuit or combination of circuits. To the extent that a device, circuit, processor or circuitry is described or recited in a claims as performing one or more operations or functions or as configured to perform to one or more operations or functions, the performance of the recited function(s) or operation(s) can be distributed across two or more devices, circuits, or processors without departing from the scope of the claims unless those functions or operations are explicitly recited as being performed on a specific single circuit or set of circuits, processor, or device (e.g., using the phrase "on a single circuit", "on the set of circuits comprising" or "on a single device").

While the foregoing written description of the methods and systems enables one of ordinary skill to make and use embodiments thereof, those of ordinary skill will understand and appreciate the existence of variations, combinations, and equivalents of the specific embodiment, method, and examples herein. For example, specific values for bandwidths, channels and sub bands discussed above are exemplary. The present methods and systems should therefore not be limited by the above described embodiments, methods, and examples, but by all embodiments and methods within the scope and spirit of the disclosure.

## Claims

1. A first device, comprising:
a circuit configured to provide frames across a connection comprised of one or more links to a second device, wherein the circuit is configured to use during an idle condition a lower power consuming link of the links for link management operations, is configured to use during the idle condition the lower power consuming link of the links for beacon synchronization operations, or is configured to select the links in response to traffic parameters and a power consumption characteristic of the links.

2. The first device of claim 1, wherein the frames are provided according to an 802.11 protocol and the connection is established by using an association or authentication operation,
and/or
wherein the circuit is configured to put one or more selected links of the links in a sleep mode when required performance is reduced.

3. The first device of claims 1 or 2, wherein the circuit is configured to use during the idle condition the lower power consuming link of the links for link management operations in response to a low battery condition, is configured to use during the idle condition the lower power consuming link of the links for beacon synchronization operations in response to the low battery condition, or is configured to select the links in response to the traffic parameters and the power consumption characteristic of the links in response to the low battery condition.

4. The first device of any of the previous claims, wherein the circuit is configured to use during the idle condition the lower power consuming link of the links for link management operations, is configured to use during the idle condition the lower power consuming link of the links for beacon synchronization operations, and is configured to select the links in response to the traffic parameters and the power consumption characteristic of the links.

5. The first device of any of the previous claims, wherein the first device the second device are each one of mobile station devices or mobile access points.

6. The first device of any of the previous claims, wherein the traffic parameters comprise a number of packets per second or a rate at which data is arriving,
and/or
wherein at least one of the links uses the 2.4 GHz frequency band, and another of the links uses the 5 GHZ frequency band.

7. A first device, comprising:
a circuit configured to provide multilink operations across a connection to a second device, wherein the circuit is configured to select one or more links associated with the multilink operations, wherein the one or more links are selected in response to a user facing parameter or an environmental parameter, wherein the links are selected to reduce power consumption associated with the multilink operations.

8. The first device of claim 7, wherein the circuit is configured to use during idle condition a lower power consuming link of the links for link management operations.

9. The first device of claim 8, wherein the circuit is configured to use during the idle condition the lower power consuming link of the links for beacon synchronization operations,
and/or
wherein the circuit is configured to select the links in response to traffic parameters and a power consumption characteristic of the links.

10. The first device of claims 8 or 9, wherein the one or more links are selected in response to the user facing parameter, wherein the user facing parameter comprises a traffic parameter,
and/or
wherein the one or more links are selected in response to the environmental parameter, wherein the environmental parameter comprises a connection quality parameter.

11. A first device, comprising:
a circuit configured to provide multilink operations across a connection to a second device, wherein the circuit is configured to select one or more links associated with the multilink operations, wherein the one or more links are selected to reduce power consumption associated with the multilink operations in response to a low battery condition.

12. The first device of claim 11, wherein the low battery condition is associated with a battery of the first device being below a first threshold and the first device being solely on battery power.

13. The first device of claims 11 or 12, wherein during the low battery condition, the circuit is configured to use during an idle condition a lower power consuming link of the links for link management operations, is configured to use during the idle condition the lower power consuming link of the links for beacon synchronization operations, or is configured to select the links in response to traffic parameters and a power consumption characteristic of the links.

14. The first device of any of claims 11 to 13, wherein during the low battery condition, the circuit is configured to use during an idle condition a lower power consuming link of the links for link management operations, is configured to use during the idle condition the lower power consuming link of the links for beacon synchronization operations, and is configured to select the links in response to a traffic parameter and a power consumption characteristic of the links, in particular,
wherein the traffic parameter is used to determine a throughput requirement and a latency requirement for selection of the links.

15. The first device of any of claims 11 to 14, wherein the one or more links are selected in response to a user facing parameter or an environmental parameter.
